# FASCICULE DE BREVET EUROPEEN

(11) **EP 1 544 434 B1**
(45) Date de publication et mention de la délivrance du brevet: **30.04.2014**
(21) Numéro de dépôt: 04292728.5
(22) Date de dépôt: 17.11.2004
(51) Int. Cl.: F02B 25/24, F02B 29/02

(54) **Procédé de commande d'un moteur à combustion interne suralimenté**
Verfahren zur Steuerung einer abgasturbogeladenen Brennkraftmaschine
Method for controlling turbo-charged internal-combustion engine

(30) Priorité: 18.12.2003 FR 0314967
(43) Date de publication de la demande: 22.06.2005
(73) Titulaire: Institut Français du Pétrole, 92852 Rueil Malmaison Cedex (FR)
(72) Inventeur: Pagot, Alexandre, 92500 Rueil Malmaison (FR); Monnier, Gaetan, 92500 Rueil Malmaison (FR)

(56) Documents cités:
- GB-A- 338 872
- US-A- 4 217 866
- US-A- 4 733 535

## Description

La présente invention se rapporte à un procédé de commande d'un moteur à combustion interne suralimenté à au moins deux cylindres et à un moteur utilisant un tel procédé.

Généralement, la puissance délivrée par un moteur à combustion interne est tributaire de la quantité d'air introduite dans la chambre de combustion de ce moteur, quantité d'air qui est elle-même proportionnelle à la densité de cet air. Comme cela est déjà connu, en cas de besoin d'une forte puissance, l'air d'admission peut être comprimé, par tous moyens de compression, tel qu'un turbocompresseur, avant son introduction dans le cylindre du moteur, pour obtenir une suralimentation en air de ce cylindre.

Pour augmenter cette quantité d'air dans le cylindre et, dans le cas d'un moteur à allumage commandé, réduire la sensibilité au cliquetis, il est prévu d'évacuer les gaz brûlés résiduels dans la chambre de combustion, avant la fin de la phase d'échappement du moteur, pour les remplacer par de l'air suralimenté, étape qui est plus communément appelée balayage des gaz brûlés.

Ce balayage peut être réalisé en effectuant, au voisinage du point mort haut d'un cylindre en fin de phase d'échappement et en début de phase d'admission, un croisement des soupapes d'échappement et d'admission, comme cela est décrit dans le brevet US 4 217 866 pour un moteur à injection indirecte. Ce croisement est réalisé en ouvrant simultanément, pendant quelques degrés à quelques dizaines de degrés d'angle de rotation de vilebrequin, les soupapes d'échappement et d'admission du cylindre en fin de phase d'échappement et cela à proximité du point mort haut (PMH) de son piston. Pour ce faire, ce cylindre comprend un moyen d'admission spécifique pour de l'air suralimenté non carburé en complément d'un moyen d'admission conventionnel pour admettre de l'air suralimenté carburé dans la chambre de combustion, chacun des moyens étant constitué d'une tubulure et d'une soupape. Dans cette configuration, ce balayage des gaz brûlés est accompli par le croisement des soupapes d'échappement et de ia soupape d'admission d'air suralimenté non carburé, de manière à ce que cet air, qui est à une pression supérieure de celle à l'échappement, soit introduit dans la chambre de combustion et balaye ces gaz pour les évacuer au travers des soupapes d'échappement et occupe ainsi le volume libéré par ces gaz. A la fin du balayage, les soupapes d'échappement se ferment et de l'air suralimenté carburé est admis dans la chambre de combustion par l'autre moyen d'admission qui est muni d'un injecteur de carburant.

Ce type de moteur bien que donnant satisfaction présente néanmoins des inconvénients non négligeables.

En effet, pour pouvoir réaliser un tel balayage, la pression d'admission de l'air suralimenté doit être supérieure à celle de l'échappement des gaz brûlés au voisinage du point mort haut du piston pour pouvoir pousser ces gaz d'échappement vers la soupape d'échappement et à les remplacer par de l'air suralimenté admis au travers de la soupape d'admission.

Cependant, l'utilisation d'un turbocompresseur conventionnel, qui comprend une entrée unique des gaz d'échappement dans la turbine, ne permet pas, dans certains cas, de réaliser ce balayage pour des moteurs à au moins deux cylindres et plus particulièrement à des moteurs avec quatre cylindres.

En effet, les gaz d'échappement sortant de chaque cylindre par les moyens d'échappement sont dirigés vers l'entrée unique de la turbine du turbocompresseur par un conduit raccordant, directement ou indirectement par l'intermédiaire d'un collecteur d'échappement, tous les échappements de tous les cylindres avec l'entrée de la turbine.

Ainsi, au début de chaque phase d'échappement d'un cylindre et lors de l'ouverture des soupapes d'échappement, la pression d'échappement à l'entrée de la turbine subit une augmentation pendant quelques degrés d'angle de rotation du vilebrequin. Cette augmentation de pression se répercute, par l'intermédiaire du collecteur, au niveau des soupapes d'échappement des autres cyiindres.

Dans un moteur à quatre temps et à au moins deux cylindres, comme un moteur à quatre cylindres, le cycle de fonctionnement de ce moteur est tel que le début de la phase d'admission d'un cylindre avec une ouverture de la soupape d'admission débute sensiblement en même temps que le début de la phase d'échappement d'un autre cylindre avec une ouverture de la soupape d'échappement. De ce fait, lorsque le cylindre est en phase d'admission avec balayage de gaz brûlés par croisement des soupapes d'admission et d'échappement, les gaz d'échappement issus du cylindre en début de phase d'échappement sont en communication par le collecteur d'échappement avec le cylindre en début de phase d'admission pour lequel la soupape d'échappement est ouverte pour assurer ce balayage. Les gaz d'échappement présents dans le collecteur sont donc à une pression supérieure à celle de la pression d'admission et interdisent, pendant le croisement des soupapes, l'évacuation des gaz brûlés par la soupape d'échappement du cylindre en début de phase d'admission.

Pour remédier à ce problème, il est connu d'utiliser un turbocompresseur spécifique, dénommé turbocompresseur double flux. Dans ce type de turbocompresseur, l'entrée des gaz d'échappement au niveau de la turbine est divisée en deux sections, une première section raccordée, directement ou par l'intermédiaire d'un collecteur, aux échappements d'une partie des cylindres et une deuxième section raccordée aux échappements des autres cylindres. De manière à éviter l'inconvénient décrit ci-dessus, chaque section est reliée à des cylindres pour lesquels une phase d'admission d'un cylindre et une phase d'échappement d'un autre cylindre ne se produisent pas simultanément.

Ainsi, lorsque l'un des cylindres relié à une section du turbocompresseur est en début de phase d'admission avec balayage des gaz brûlés, la pression des gaz d'échappement du cylindre en début de phase d'échappement, qui est connecté à l'autre section du turbocompresseur, ne peut pas gêner le balayage des gaz brûlés.

Cette technologie de turbocompresseur à double flux, bien que donnant satisfaction, est d'un coût beaucoup plus élevé que les turbocompresseurs conventionnels à entrée unique.

Dans le document GB 338 872, la soupape d'échappement d'un cylindre en phase d'admission avec balayage des gaz brûlés est en position ouverte simultanément avec la soupape d'échappement d'un cylindre en phase d'échappement. Ce dernier génère une bouffée de pression des gaz d'échappement qui est transmise au cylindre en phase d'admission.

De ce fait, la pression des gaz d'échappement présent dans la chambre de combustion du cylindre en phase d'admission plus élevée que la pression d'admission de ce même cylindre et le balayage des gaz brûlés ne pourra pas se faire ou se réalisera très difficilement

La présente invention se propose de remédier aux inconvénients mentionnés ci-dessus grâce à une commande du moteur qui permet de réaliser à tous moments le balayage des gaz brûlés d'un cylindre et d'utiliser un air suralimenté par l'intermédiaire d'un turbocompresseur à une seule entrée.

A cet effet, l'invention se rapporte à un procédé de commande d'un moteur à combustion interne suralimenté à au moins deux cylindres avec un cycle de combustion durant lequel un cylindre du moteur est en phase d'admission avec un balayage des gaz brûlés au voisinage de son point mort haut alors qu'un autre cylindre est en phase d'échappement au voisinage de son point mort bas, les cylindres comprenant au moins un moyen d'admission avec une soupape d'admission et au moins un moyen d'échappement avec une soupape d'échappement, caractérisé en ce qu'il consiste à :
- réaliser le balayage des gaz brûlés du cylindre en phase d'admission par une phase de croisement de soupapes en ouvrant simultanément ses soupapes d'échappement et d'admission,
- à commander en ouverture la soupape d'échappement du cylindre en phase d'échappement au voisinage de la fin du balayage des gaz brûlés de manière à ce que, pendant au moins une partie de la phase de croisement, la pression à l'échappement du cylindre en phase d'admission soit inférieure à sa pression d'admission.

Ce procédé peut consister à commander en ouverture la soupape d'échappement du cylindre en phase d'échappement de manière à ce que la pression à l'échappement du cylindre en phase d'admission soit égale à sa pression d'admission lors de la fermeture de sa soupape d'échappement.

Il peut consister à commander en ouverture la soupape d'échappement du cylindre en phase d'échappement à la fermeture de la soupape d'échappement du cylindre en phase d'admission.

Il peut aussi consister à commander en ouverture la soupape d'échappement du cylindre en phase d'échappement de manière à ce que la pression à l'échappement du cylindre en phase d'admission soit supérieure à sa pression d'admission lors de la fermeture de sa soupape d'échappement, le balayage des gaz brûlés étant réalisé au début de la phase de croisement des soupapes.

Il peut consister aussi à ouvrir la soupape d'échappement du cylindre en phase d'échappement après la fermeture de la soupape d'échappement du cylindre en phase d'admission.

L'invention concerne également un moteur à combustion interne suralimenté à au moins deux cylindres comprenant au moins un moyen d'admission avec une soupape d'admission et au moins un moyen d'échappement avec une soupape d'échappement et des moyens de commande des soupapes d'admission et d'échappement d'un cylindre en phase d'admission pour réaliser un balayage des gaz brûlés, caractérisé en ce qu'il comprend des moyens pour commander en ouverture la soupape d'échappement d'un cylindre en phase d'échappement au voisinage de la fin du balayage de manière à ce que la pression à l'échappement du cylindre en phase d'admission avec balayage des gaz brûlés soit inférieure à sa pression d'admission, pendant au moins une partie de la phase de balayage.

Les moyens de commande peuvent comprendre des moyens de variation du phasage de la loi de levée d'au moins des soupapes d'échappement.

Lorsque la suralimentation de l'air d'admission est assurée par un turbocompresseur, ce turbocompresseur comprend une entrée unique de gaz d'échappement.

Les autres caractéristiques et avantages de l'invention vont apparaître à la lecture de la description qui va suivre, donnée à titre uniquement illustratif et non limitatif, et à laquelle sont annexés :
- la figure 1 qui montre un moteur suralimenté à quatre cylindres selon l'invention et
- la figure 2 qui est un graphique avec des courbes illustrant la pression (P en bar) à l'admission et à l'échappement d'un cylindre en phase de balayage de gaz brûlés en fonction de la rotation du vilebrequin (en degrés), les lois de levée (L) des soupapes d'admission et d'échappement d'un cylindre en phase de balayage des gaz brûlés et la loi de levée de la soupape d'échappement d'un autre cylindre en phase d'échappement en fonction de la rotation de ce vilebrequin.

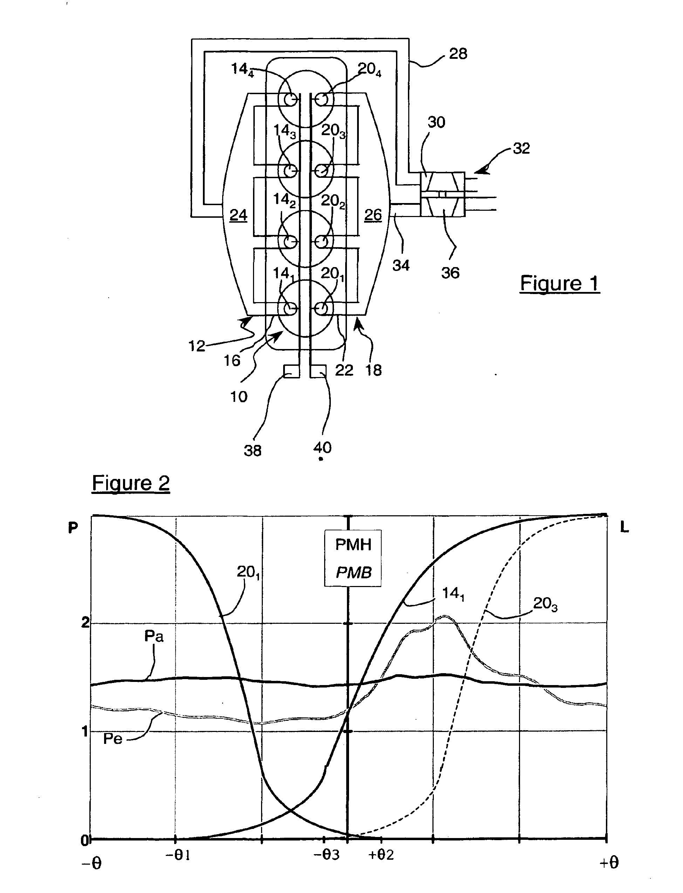

Sur la figure 1, un moteur à combustion interne suralimenté, par exemple à injection directe de carburant, comporte quatre cylindres 10 ou un multiple de quatre cylindres, tel que huit ou douze cylindres en ligne ou en V. Dans l'exemple de la figure 1, les cylindres sont dénommés successivement cylindre N°1, cylindre N°2, cylindre N°3 et cylindre N°4 à partir du bas de cette figure. Chaque cylindre comprend au moins un moyen d'admission 12 avec une soupape d'admission 14 (référencée 14₁ à 14₄ en fonction du cylindre qui la porte) ainsi qu'une tubulure d'admission 16 et au moins un moyen d'échappement 18 avec une soupape d'échappement 20 (référencée 20₁ à 20₄ en fonction également du cylindre qui la porte) et une tubulure d'échappement 22. Les tubulures des moyens d'admission 12 aboutissent à un collecteur d'admission 24 alors que les tubulures des moyens d'échappement 18 aboutissent à un collecteur d'échappement 26. Le collecteur d'admission est relié par une conduite 28 à la sortie de la section de compression 30 d'un turbocompresseur 32 à entrée unique alors que le collecteur d'échappement 26 est raccordé par une conduite 34 à l'entrée unique de la turbine 36 de ce turbocompresseur.

Comme connu en soit, chaque cylindre comprend un piston mobile en un mouvement transiatif aiternatif entre une position haute, dite point mort haut (PMH), et une position basse, dite point mort bas (PMB), grâce à une bielle reliée à un maneton d'un vilebrequin que comporte habituellement un tel moteur. Ce cylindre comprend également une chambre de combustion délimitée par le haut du piston et le haut du cylindre et dans laquelle débouchent les moyens d'admission 12 et d'échappement 18.

Les soupapes d'admission 14₁ à 14₄ et les soupapes d'échappement 20₁ à 20₄ sont commandées en ouverture et en fermeture par des moyens respectivement 38 et 40 permettant de faire varier le phasage des lois de levée de ces soupapes et ce indépendamment les unes des autres ou de manière associée, comme ceux connus sous le sigle VVA (Variable Valve Actuation) ou VVT (Variable Valve Timing), des moyens de commande de type VVT seront utilisés préférentiellement.

Dans l'exemple représenté sur cette figure, le moteur fonctionne avec un cycle qui est dénommé 1, 3, 4, 2 dans lequel, durant le cycle de combustion et à un angle de rotation déterminé du vilebrequin, un cylindre, comme le cylindre N°1, est en phase d'admission avec une phase de balayage des gaz brûlés présents dans la chambre de combustion par ouverture simultanée des soupapes d'admission 14₁ et d'échappement 20₁, le cylindre suivant (cylindre N°2) est en phase de compression avec la soupape d'échappement 20₂ et d'admission 14₂ en position fermée, le cylindre N°3 en phase d'échappement avec ouverture de la soupape d'échappement 20₃ et le dernier cylindre (cylindre N°4) en phase de détente, les soupapes d'échappement 20₄ et d'admission 14₄ étant fermées.

Afin d'éviter que les gaz d'échappement provenant du cylindre N°3 ne viennent entraver l'évacuation des gaz d'échappement lors de l'étape de balayage des gaz brûlés du cylindre N°1 en phase d'admission, il est prévu d'ouvrir la soupape d'échappement du cylindre N°3 de manière telle que l'augmentation de pression des gaz d'échappement résultant de cette ouverture ne vienne pas perturber cette évacuation ou bien que le bilan global soit toujours en faveur de la pression d'admission.

A titre d'exemple, ceci peut être réalisé en ouvrant la soupape d'échappement du cylindre N°3 d'une façon telle que la pression d'échappement dans le collecteur d'échappement 26 soit inférieure à la pression d'admission pendant toute la durée du balayage des gaz brûlés.

On se rapporte maintenant à la figure 2 qui montre la variation de pression à l'admission Pa et à l'échappement Pe du cylindre N°1 en fonction du débattement du piston entre un angle de vilebrequin de -θ à +θ en passant par le point mort haut (PMH) de ce piston. Cette figure montre également les lois de levées des soupapes d'échappement 20₁ et d'admission 14₁ pendant ce même débattement. Enfin, il est montré, en correspondance avec ce débattement du piston du cylindre N°1, la loi de levée (en traits pointillés) de la soupape d'échappement 20₃ du cylindre N°3 à partir de son point mort bas (PMB) correspondant.

Durant la phase d'échappement du cylindre N°1, la soupape d'admission 14₁ est fermée et la soupape 20₁ s'ouvre. Les gaz d'échappement présents dans la chambre de combustion sont évacués au travers de cette soupape d'échappement sous l'effet conjoint de la montée du piston vers le PMH et la différence de pressions entre la pression de ces gaz dans la chambre de combustion et la pression Pe à l'échappement dans le collecteur.

Lorsque le piston de ce cylindre est au voisinage de ce PMH, c'est-à-dire de quelques degrés à quelques dizaines de degrés d'angle de vilebrequin avant ce PMH, une phase de croisement des soupapes est réalisée grâce aux moyens commande 38, 40. Ce croisement est réalisé en ouvrant la soupape d'admission 14₁ à l'angle -θ1 et en maintenant la soupape d'échappement 20₁ ouverte par modification du phasage des les lois de levés de ces soupapes. A cet angle, la pression d'admission Pa à l'admission de ce cylindre est supérieure à la pression Pe à l'échappement de ce même cylindre. De ce fait, les gaz brûlés résiduels encore présents dans la chambre de combustion sont balayés dans la chambre de combustion pour être évacués au travers de la soupape d'échappement et sont remplacés par l'air suralimenté introduit dans cette chambre. Cette opération de balayage de gaz brûlés se termine à la fermeture de la soupape d'échappement 20₁ à un angle de vilebrequin +θ2 après le PMH. L'intervalle d'angle -θ1 à +θ2 autour du PMH, qui correspond à la phase de croisement des soupapes avec balayage des gaz brûlés, est défini d'une manière telle que le maximum des gaz brûlés résiduels est évacué et remplacé par de l'air suralimenté.

Pour assurer ce balayage, il est nécessaire que la pression Pa soit supérieure à la pression Pe mais au PMH du cylindre N°1 correspond un PMB d'un cylindre en phase d'échappement comme le cylindre N°3 durant laquelle la soupape d'échappement 20₃ s'ouvre.

Pour éviter que l'ouverture de cette soupape d'échappement génère une augmentation de pression à l'échappement du cylindre N°1, via le collecteur d'échappement 26, d'une manière telle que cette pression d'échappement soit supérieure à la pression d'admission de ce cylindre, les moyens de commande 40 ouvrent la soupape d'échappement 20₃ du cylindre N°3 au voisinage de la fin de l'opération de balayage du cylindre N°1 ou à la fin de l'opération de balayage du cylindre N°1 ou après la fin de ce balayage lorsque la soupape d'échappement 20₁ du cylindre N°1 est fermée.

Cette commande en ouverture de la soupape d'échappement 20₃ peut être également telle que la pression d'échappement soit supérieure à la pression d'admission au voisinage au voisinage de la fin de l'opération de balayage mais sera déterminée d'une 'façon telle que le bilan global de l'admission d'air suralimenté soit en faveur de cet air.

Comme montré sur la figure 2 illustrant un exemple où la soupape d'échappement 20₁ est commandée en ouverture à la fin de la phase de croisement, l'ouverture de la soupape d'échappement 20₃ du cylindre N°3 débute au voisinage de son PMB à un angle de vilebrequin -θ3 qui correspond à un angle très proche ou confondu avec l'angle θ2 de fermeture de la soupape d'échappement du cylindre N°1.

En pratique, la soupape 20₃ s'ouvre à un angle -θ3 situé à quelques degrés ou quelques dizaines de degrés avant l'angle +θ2 pour obtenir une différence de pressions entre la pression d'admission Pa et la pression d'échappement Pe qui soit toujours en faveur de la pression d'admission Pa et qui soit quasiment nulle, voire nulle, à la fermeture de la soupape d'échappement 20₁. En effet, à l'ouverture de la soupape 20₃ et comme cela est montré sur la figure entre les angles -θ3 et +θ2, la pression d'échappement Pe augmente de manière progressive en fonction de l'étendue de l'ouverture de cette soupape jusqu'à égaler la pression d'admission à l'angle +θ2 puis à la dépasser à partir de cet angle. Comme déjà mentionné, la soupape 20₃ peut être commandée en ouverture à un angle tel que la différence de pressions entre la pression d'admission Pa et la pression d'échappement Pe, à la fermeture de la soupape d'échappement 20₁, soit être en faveur de la pression d'admission Pe. Cette ouverture sera commandée de telle sorte que le bilan soit globalement positif dans le sens que la quantité d'air suralimenté introduite au début de la phase de croisement des soupapes soit supérieure à la quantité de gaz brûlés résiduels.

Ceci est possible en réalisant, grâce au moyen de commande 40 de type VVT, un déphasage de la loi de levée de la soupape d'échappement 20₃ par rapport à son origine. Plus précisément, le début de la courbe représentative de cette loi au point -83 sera plus éloigné du point -θ1 de l'ouverture de la soupape d'admission que le début de cette même courbe de la loi de levée de la soupape d'échappement 20₃ avec un fonctionnement sans croisement de soupape.

Bien entendu, dans la description qui précède, lorsqu'il est fait mention de point mort haut ou de point mort bas pour un piston cela s'entend aussi pour la position du maneton auquel il est lié par la bielle.

En outre, la description qui précède s'applique aussi bien aux moteurs suralimentés à injection indirecte qu'aux moteurs suralimentés à injection directe, notamment à allumage commandé.

## Revendications

1. Procédé de commande d'un moteur à combustion interne suralimenté à au moins deux cylindres avec un cycle de combustion durant lequel un cylindre (10) du moteur est en phase d'admission avec un balayage des gaz brûlés au voisinage de son point mort haut (PMH) alors qu'un autre cylindre est en phase d'échappement au voisinage de son point mort bas (PMB), les cylindres comprenant au moins un moyen d'admission (12) avec une soupape d'admission (14₁, 14₂, 14₃, 14₄) et au moins un moyen d'échappement (18) avec une soupape d'échappement (20₁, 20₂, 20₃, 20₄), **caractérisé en ce qu'**il consiste à :
- réaliser le balayage des gaz brûlés du cylindre en phase d'admission par une phase de croisement de soupapes en ouvrant simultanément ses soupapes d'échappement (20₁) et d'admission (14₁),
- à commander en ouverture la soupape d'échappement (20₃) du cylindre en phase d'échappement au voisinage de la fin du balayage des gaz brûlés de manière à ce que, pendant au moins une partie de la phase de croisement, la pression à l'échappement (Pe) du cylindre en phase d'admission soit inférieure à sa pression d'admission (Pa).

2. Procédé de contrôle d'un moteur suralimenté selon la revendication 1, **caractérisé en ce qu'**il consiste à commander en ouverture la soupape d'échappement (20₃) du cylindre en phase d'échappement de manière à ce que la pression à l'échappement (Pe) du cylindre en phase d'admission soit égale à sa pression d'admission (Pa) lors de la fermeture de sa soupape d'échappement (20₁).

3. Procédé de contrôle d'un moteur suralimenté selon la revendication 1 ou 2, **caractérisé en ce qu'**il consiste à commander en ouverture la soupape d'échappement (20₃) du cylindre en phase d'échappement à la fermeture de la soupape d'échappement (20₁) du cylindre en phase d'admission.

4. Procédé de contrôle d'un moteur suralimenté selon la revendication 1, **caractérisé en ce qu'**il consiste à commander en ouverture la soupape d'échappement (20₃) du cylindre en phase d'échappement de manière à ce que la pression à l'échappement (Pe) du cylindre en phase d'admission soit supérieure à sa pression d'admission (Pa) lors de la fermeture de sa soupape d'échappement (20₁).

5. Procédé de contrôle d'un moteur suralimenté selon la revendication 1, **caractérisé en ce qu'**il consiste à ouvrir la soupape d'échappement (20₃) du cylindre en phase d'échappement après la fermeture de la soupape d'échappement (20₁) du cylindre en phase d'admission.

6. Moteur à combustion interne suralimenté à au moins deux cylindres (10) comprenant au moins un moyen d'admission (12) avec une soupape d'admission (14₁, 14₂, 14₃, 14₄) et au moins un moyen d'échappement (18) avec une soupape d'échappement (20₁, 20₂, 20₃, 20₄) et des moyens de commande (40) des soupapes d'échappement et d'admission d'un cylindre en phase d'admission pour réaliser un balayage des gaz brûlés, **caractérisé en ce qu'**il comprend des moyens de commande (40) des soupapes d'échappement (20₁, 20₂, 20₃, 20₄) pour commander en ouverture la soupape d'échappement (20₃) d'un cylindre en phase d'échappement au voisinage de la fin du balayage, de manière à ce que la pression à l'échappement (Pe) du cylindre en phase d'admission avec balayage des gaz brûlés soit inférieure à sa pression d'admission (Pa), pendant au moins une partie de la phase de balayage.

7. Moteur à combustion interne suralimenté selon la revendication 6, **caractérisé en ce que** les moyens de commande (38, 40) comprennent des moyens de variation du phasage de la loi de levée d'au moins des soupapes d'échappement (20₁, 20₂, 20₃, 20₄).

8. Moteur à combustion interne suralimenté selon l'une des revendications 6 à 7 dans lequel un turbocompresseur assure la compression de l'air d'admission, **caractérisé en ce que** le turbocompresseur (32) comprend une entrée unique de gaz d'échappement.

## Patentansprüche

1. Verfahren zum Steuern eines aufgeladenen Verbrennungsmotors mit mindestens zwei Zylindern mit einem Verbrennungszyklus, im Laufe dessen ein Zylinder (10) des Motors in Ansaugphase mit einem Spülen der verbrannten Gase in der Nähe seines oberen Totpunkts (OTP) ist, während ein anderer Zylinder in Auslassphase in der Nähe seines unteren Totpunkts (UTP) ist, wobei die Zylinder mindestens ein Einlassmittel (12) mit einem Einlassventil (14₁, 14₂, 14₃, 14₄) und mindestens einen Auslassmittel (18) mit einem Auslassventil (20₁, 20₂, 20₃, 20₄) aufweisen, **dadurch gekennzeichnet, dass** es aus Folgendem besteht:
- Ausführen des Spülens der verbrannten Gase des Zylinders in Ansaugphase durch eine Ventilkreuzungsphase, indem sein Auslassventil (20₁) und sein Einlassventil (14₁) gleichzeitig geöffnet werden,
- Steuern des Öffnens des Auslassventils (20₃) des Zylinders in Auslassphase in der Nähe des Endes des Spülens der verbrannten Gase derart, dass, während mindestens eines Teils der Kreuzungsphase der Auslassdruck (Pe) des Zylinders in Ansaugphase kleiner ist als sein Ansaugdruck (Pa).

2. Verfahren zum Steuern eines aufgeladenen Motors nach Anspruch 1, **dadurch gekennzeichnet, dass** es darin besteht, das Öffnen des Auslassventils (20₃) des Zylinders in Auslassphase derart zu steuern, dass der Auslassdruck (Pe) des Zylinders in Ansaugphase beim Schließen seines Auslassventils (20₁) gleich seinem Ansaugdruck (Pa) ist.

3. Verfahren zum Steuern eines aufgeladenen Motors nach Anspruch 1 oder 2, **dadurch gekennzeichnet, dass** es darin besteht, das Öffnen des Auslassventils (20₃) des Zylinders in Auslassphase beim Schließen des Auslassventils (20₁) des Zylinders in Ansaugphase zu steuern.

4. Verfahren zum Steuern eines aufgeladenen Motors nach Anspruch 1, **dadurch gekennzeichnet, dass** es darin besteht, das Auslassventil (20₃) des Zylinders in Auslassphase derart zu steuern, dass der Auslassdruck (Pe) des Zylinders in Ansaugphase beim Schließen seines Auslassventils (20₁) größer ist als sein Ansaugdruck (Pa).

5. Verfahren zum Steuern eines aufgeladenen Motors nach Anspruch 1, **dadurch gekennzeichnet, dass** es darin besteht, das Auslassventil (20₃) des Zylinders in Auslassphase nach dem Schließen des Auslassventils (20₁) des Zylinders in Ansaugphase zu öffnen.

6. Aufgeladener Verbrennungsmotor mit mindestens zwei Zylindern (10), der mindestens ein Einlassmittel (12) mit einem Einlassventil (14₁, 14₂, 14₃, 14₄) und mindestens ein Auslassmittel (18) mit einem Auslassventil (20₁, 20₂, 20₃, 20₄) und Steuermittel (40) des Auslass- und Einlassventils eines Zylinders in Ansaugphase aufweist, um ein Spülen der verbrannten Gase auszuführen, **dadurch gekennzeichnet, dass** er Mittel (40) zum Steuern der Auslassventile (20₁, 20₂, 20₃, 20₄) zum Steuern des Öffnens des Auslassventils (20₃) eines Zylinders in Auslassphase in der Nähe des Endes des Spülens derart aufweist, dass der Auslassdruck (Pe) des Zylinders in Ansaugphase mit Spülen der verbrannten Gase während mindestens eines Teils der Spülphase kleiner ist als sein Ansaugdruck (Pa).

7. Aufgeladener Verbrennungsmotor nach Anspruch 6, **dadurch gekennzeichnet, dass** die Steuermittel (38, 40) Mittel zum Variieren der Phasenabfolge des Hubgesetzes mindestens der Auslassventile (20₁, 20₂, 20₃, 20₄) aufweisen.

8. Aufgeladener Verbrennungsmotor nach einem der Ansprüche 6 bis 7, bei dem ein Turboverdichter das Verdichten der Ansaugluft sicherstellt, **dadurch gekennzeichnet, dass** der Turboverdichter (32) einen einzigen Abgaseinlass aufweist.

## Claims

1. A method of controlling a supercharged internal-combustion engine having at least two cylinders with a combustion cycle wherein a cylinder (10) of the engine is in the intake phase with burnt gas scavenging in the vicinity of the top dead center (TDC) thereof while another cylinder is in the exhaust phase in the vicinity of the bottom dead center (BDC) thereof, the cylinders comprising at least one intake means (12) with an intake valve (14₁, 14₂, 14₃, 14₄) and at least one exhaust means (18) with an exhaust valve (20₁, 20₂, 20₃, 20₄), **characterized in that** it consists in :
- carrying out scavenging of the burnt gases of the cylinder in the intake phase by means of a valve overlap phase, by opening simultaneously its exhaust (20₁) and intake (14₁) valves,
- controlling opening of exhaust valve (20₃) of the cylinder in the exhaust phase in the vicinity of the burnt gas scavenging end so that, during at least part of the overlap phase, exhaust pressure (Pe) of the cylinder in the intake phase is lower than its intake pressure (Pa).

2. A supercharged engine control method as claimed in claim 1, **characterized in that** it consists in controlling opening of exhaust valve (20₃) of the cylinder in the exhaust phase so that exhaust pressure (Pe) of the cylinder in the intake phase is equal to its intake pressure (Pa) upon closing of its exhaust valve (20₁).

3. A supercharged engine control method as claimed in claim 1 or 2, **characterized in that** it consists in controlling opening of exhaust valve (20₃) of the cylinder in the exhaust phase upon closing of exhaust valve (20₁) of the cylinder in the intake phase.

4. A supercharged engine control method as claimed in claim 1, **characterized in that** it consists in controlling opening of exhaust valve (20₃) of the cylinder in the exhaust phase so that exhaust pressure (Pe) of the cylinder in the intake phase is higher than its intake pressure (Pa) upon closing of its exhaust valve (20₁).

5. A supercharged engine control method as claimed in claim 1, **characterized in that** it consists in opening exhaust valve (20₃) of the cylinder in the exhaust phase after closing of exhaust valve (20₁) of the cylinder in the intake phase.

6. A supercharged internal-combustion engine with at least two cylinders (10) comprising at least one intake means (12) with an intake valve (14₁, 14₂, 14₃, 14₄) and at least one exhaust means (18) with an exhaust valve (20₁, 20₂, 20₃, 20₄), and means (40) for controlling the exhaust and intake valves of a cylinder in the intake phase for carrying out burnt gas scavenging, **characterized in that** it comprises means (40) for controlling exhaust valves (20₁, 20₂, 20₃, 20₄) so as to control opening of exhaust valve (20₃) of a cylinder in the exhaust phase in the vicinity of the scavenging end, so that exhaust pressure (Pe) of the cylinder in the intake phase with burnt gas scavenging is lower than its intake pressure (Pa), during at least part of the scavenging phase.

7. A supercharged internal-combustion engine as claimed in claim 6, **characterized in that** control means (38, 40) comprise means of varying the phasing of the lift law for at least exhaust valves (20₁, 20₂, 20₃, 20₄).

8. A supercharged internal-combustion engine as claimed in any one of claims 6 to 7, wherein a turbocharger provides compression of the intake air, **characterized in that** turbocharger (32) comprises a single exhaust gas inlet.
